# EUROPEAN PATENT SPECIFICATION

(11) **EP 3 414 708 B1**
(45) Date of publication and mention of the grant of the patent: **28.09.2022**
(21) Application number: 17707723.7
(22) Date of filing: 08.02.2017
(51) Int. Cl.: G06K 19/07, G01D 9/00, G06Q 10/08

(54) **ADAPTIVE SENSOR SAMPLING OF A COLD CHAIN DISTRIBUTION SYSTEM**
ADAPTIVE SENSORERFASSUNG FÜR KÜHLKETTENVERTRIEBSSYSTEM
SÉLECTION DE DONNÉES DE CAPTEUR ADAPTATIF POUR UN SYSTEME DE LA CHAINE DU FROID

(30) Priority: 12.02.2016 US 201662294791 P
(43) Date of publication of application: 19.12.2018
(73) Proprietor: Carrier Corporation, Farmington, CT 06032 (US)
(72) Inventor: BEASLEY, Marc, Beverly Massachusetts 01915 (US); YASAR, Murat, East Hartford Connecticut 06108 (US); ADETOLA, Veronica, East Hartford Connecticut 06108 (US); VRABIE, Draguna, Richland Washington 99352 (US)
(74) Representative: Dehns
(86) International application number: PCT/US2017/016926
(87) International publication number: WO 2017/139324

(56) References cited:
- WO-A1-01/23841
- WO-A1-2016/074822
- US-A1- 2007 273 507
- US-A1- 2012 197 622
- US-A1- 2015 002 299
- US-A1- 2015 046 364
- US-A1- 2017 053 290

## Description

### TECHNICAL FIELD

The subject matter disclosed herein relates to an apparatus for cold chain monitoring of perishable goods and a method for cold chain monitoring of perishable goods.

### DESCRIPTION OF RELATED ART

Typically, cold chain distribution systems are used to transport and distribute perishable goods and environmentally sensitive goods (herein referred to as perishable goods) that may be susceptible to temperature, humidity, and other environmental factors. Perishable goods may include but are not limited to fruits, vegetables, grains, beans, nuts, eggs, dairy, seed, flowers, meat, poultry, fish, ice, blood and pharmaceuticals. Advantageously, cold chain systems allow perishable and environmentally sensitive goods (herein referred to as perishable goods) to be effectively transported and distributed without damage or other undesirable effects.

Environmental parameter sensors are often used in cold chain distribution systems to monitor the conditions and integrity of the cold chain and consequently the goods transported. Current environmental parameter sensing systems may sample and transmit data periodically at a high frequency to provide real time monitoring of the perishable goods. High frequency real time monitoring strains the overall sensor system bandwidth and drains the sensor's battery. A system and method that can provide monitoring of environmental parameters in an energy efficient manner is desired.

An exemplary system for tracking a shipping container including a data logger is disclosed in US 2015/0046364. A health monitor comprising a sensor network with a data logging system is disclosed in US 2012/0197622.

### BRIEF SUMMARY

The invention is defined by the independent claims.

Preferred embodiments are set out in the dependent claims.

Other aspects, features, and techniques will become more apparent from the following description taken in conjunction with the drawings.

### BRIEF DESCRIPTION OF THE SEVERAL VIEWS OF THE DRAWINGS

The foregoing and other features, and advantages of the disclosure are apparent from the following detailed description taken in conjunction with the accompanying drawings in which like elements are numbered alike in the several FIGURES:
FIG. 1 illustrates a schematic view of an environmental parameter monitor in a cold chain distribution system, in accordance with an embodiment; and
FIG. 2 is a schematic view of an environmental parameter monitoring system, in accordance with an embodiment.

### DETAILED DESCRIPTION

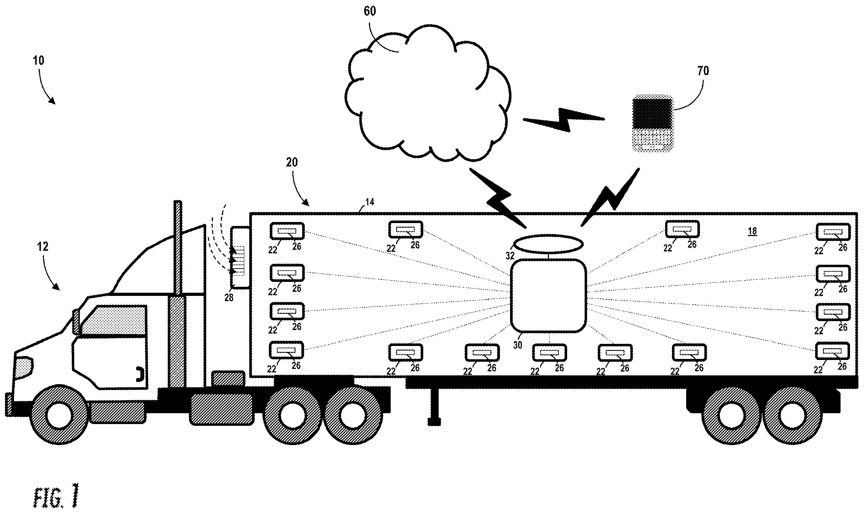

Referring now to the drawings, FIG. 1 illustrates a schematic view of an exemplary cold chain transportation system 10 suitable for use with an environmental parameter monitoring system 20. Typically, cold chain transportation systems 10 are used to transport and distribute perishable goods and environmentally sensitive goods (herein referred to as perishable goods). In the illustrated embodiment, a cold chain transportation system 10 includes an environmentally controlled container 14, an environmental control system 28 and perishable goods (not shown). The container 14 may be pulled by a tractor 12. It is understood that embodiments described herein may be applied to shipping containers that are shipped by rail, sea, or any other suitable container, without use of a tractor 12. The container 14 may define an interior compartment 18.

In an embodiment, the environmental control system 28 is associated with container 14 to provide desired environmental parameters, such as, for example temperature, pressure, humidity, carbon dioxide, ethylene, ozone, light exposure, and other conditions to the interior compartment 18. In further embodiments, the environmental control system 28 is a refrigeration system capable of providing a desired temperature and humidity range. In a yet further embodiment, perishable goods may include but are not limited to fruits, vegetables, grains, beans, nuts, eggs, dairy, seed, flowers, meat, poultry, fish, ice, blood, pharmaceuticals, or any other suitable cargo requiring cold chain transport.

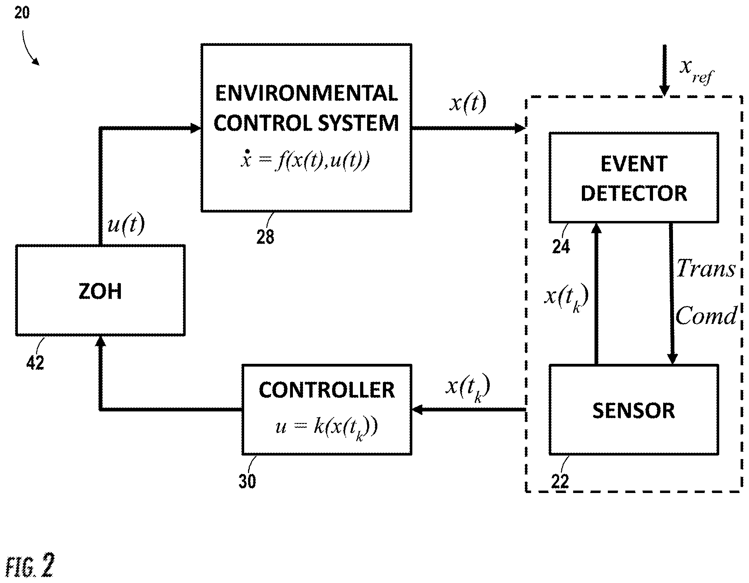

Referring to FIG. 2, in the illustrated embodiment, the environmental parameter monitoring system 20 includes, at least one environmental sensor 22, at least one event detector 24, and a controller 30. In an embodiment, the sensor 22 is utilized to monitor environmental parameters and generate a sensor reading. The sensor 22 is configured to monitor at least one environmental parameter, such as for example temperature, pressure, humidity, carbon dioxide, ethylene, ozone, light exposure, vibrations, and other conditions in the interior compartment 18. Accordingly, suitable sensors 22 are utilized to monitor the desired parameters. Advantageously, sensors 22 may be selected for certain applications depending on the perishable cargo to be monitored and the corresponding environmental sensitivities. In an embodiment, temperatures are monitored. In certain embodiments, a user desires to maintain and monitor temperatures or other parameters within an acceptable range. As seen in FIG. 1 the sensor 22 may be placed in a variety of locations within the interior compartment 18, including directly on the perishable goods.

The at least one event detector 24 is configured to detect at least one of an environmental altering event and a user induced event. For instance, the event detector 24 may determine whether at least one of an environmental altering event and a user induced event has occurred such as, for example a temperature change, or a door opening in the container 14. In further embodiments, the event detector 24 may be internal or external to the sensor 22.

Further, the controller 30 is configured to log a plurality of readings from the at least one environmental sensor 22 at a selected sampling rate. In a further embodiment, the plurality of readings are further augmented with time, position stamps or other relevant information. In a further embodiment, the controller 30 may be an electronic controller including a microprocessor and an associated memory bank. The processor may be but is not limited to a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory may be but is not limited to a random access memory (RAM), read only memory (ROM), or other electronic, optical, magnetic or any other computer readable medium. The sampling rate adjusts depending on at least one of the environmental altering event and the user induced event. Different perishable goods may require different levels of monitoring, which would determine the sampling rate. The sampling rate is how often the sensor 22 transmits a reading to the controller 30. For instance, some perishable goods may be very susceptible to temperature changes and the temperature must be closely monitored and logged in the controller 30, which would thus require a higher sampling rate. In another example, some perishable goods may not be as sensitive and thus only a major change might prompt the sensor 22 to transmit a reading to the controller 30, such as a drastic temperature change in the container 14. At least one of an environmental altering event and a user induced event may also change the sampling rate due to the fact that the perishable good may now have to be more closely monitored to ensure that conditions stabilize in a timely manner. For instance, if a door opens to the refrigerated container 14, the sampling rate may have to be increased to ensure that the temperature of the perishable good quickly returns to the correct temperature.

In an illustrated embodiment, the at least one environmental sensor 22, further includes a power source 26 providing electrical power to the sensor 22. The power source 26 may be a battery or power generation device including, but not limited to, primary cell batteries, secondary cell batteries, gas powered generators, or solar cells. Since the sensor 22 will have a dedicated power source 26, power conservation is beneficial and thus reducing the sampling rate to save power is helpful. Further, the sensor 22 may command the sampling rate to adjust. For instance, a selected sampling rate may be preloaded into the sensor 22 and the sensor 22 may, on its own, decide not to send a reading to the controller 30 unless at least one of an environmental altering event and a user induced event has occurred. For instance, if the temperature is remaining stable in the container 14, there would be no reason for the sensor 22 to transmit a reading and waste power. Thus, the sensor 22 may only transmit a reading to the controller if there is a change in an environmental parameter. In alternative embodiments, the controller 30 may determine how often the 22 transmits a reading, by pulling the readings from the sensor 22. Again the sampling rate may be adjusted based on at least one of the environmental altering event and the user induced event.

In an illustrated embodiment, the environmental parameter monitoring system 20 may further include a communication module 32 in operative communication with the controller 30 and in wireless operative communication with a remote controller 70 via a network 60. The communication module 32 is configured to transmit at least one data signal associated with the plurality of readings to the remote controller 70. In further embodiments, the wireless communication may be, but is not limited to, radio, microwave, satellite networks, cellular networks, cloud computing network, wide area network, or another wireless communication method. In a further embodiment, the environmental parameter monitoring system 20 may include a short range interface, wherein the short range interface includes at least one of: a wired interface, an optical interface, and a short range wireless interface. In further embodiments, the remote controller 70 may be but is not limited to a dedicated remote controller device, cellular phone, tablet, laptop, smartwatch, a desktop computer or any other similar device.

In a further embodiment, the controller 30 may allow a secondary data download after the perishable cargo has reached a checkpoint or a destination. Data may be transferred to an external download device. The locally downloaded data may be authenticated, provide additional data for diagnostic purposes or provide data in accordance with receiver/shipper protocols. The controller 30 may transfer data by any suitable local method, including, but not limited to USB, serial transmission, optical transmission, local Wi-Fi, personal area networks, or any other suitable local interface.

In the illustrated embodiment, the communication module 32 is configured to receive at least one remote command from the remote controller 70 and transmit the at least one remote command to the controller 30. In further embodiments, the remote controller 70 commands the sampling rate to adjust.

FIG. 2 shows the architecture of an environmental monitoring system 20 in conjunction with an environmental control system 28. The environmental monitoring system 20 will provide feedback to the environmental control system 28 to help maintain the proper environmental conditions. In an embodiment, the architecture of the environmental monitoring system 20 includes at least one environmental sensor 22, a controller 30, an environmental control system 28, and at least one event detector 24. The event detector 24 may be internal to or separate from the sensor 22. Between the controller 30 and the environmental control system 28, may be a zero-order hold (ZOH) 42 to condition the electrical signal from digital to analog for the environmental control system 28.

In an embodiment, reference parameters (*x_{ref}*) are loaded into the sensor 22 depending on the specific type of perishable good. The *x_{ref}* is the desired reference set-point for the sensor 22. The sensor 22 will monitor environmental parameters (*x*(*tₖ*)) of the perishable goods and may read the reference parameter input (*x_{ref}*) and sense a change in the environmental parameter (*x*(*tₖ*)) over a period of time. The sensor 22 will communicate the change in the reference parameter (*x_{ref}*) and environmental parameter (*x*(*tₖ*)) to the event detector 24, which will determine whether at least one of an environmental altering event and a user induced event has occurred. If at least one of an environmental altering event and a user induced event has occurred, the event detector 24 will then transmit a command back to the sensor 22 to send a reading to the controller 30, which will then analyze the reading and transmit a command to the an environmental control system 28, that is conditioned by the ZOH 42. For example, if a trailer door to a refrigerated container 14 is opened or the user changes the reference set-point, the error { (*x*(*tₖ*)) - (*x_{ref}*)}will increase and the event detector 24 will trigger data transmission to the controller 30. The environmental control system 28 will then adjust accordingly.

The controller 30 and/or the sensor(s) 22 may also increase or decrease the sampling rate of one or more sensors 22 based on the presence or absence of at least one of an environmental altering event and a user induced event. The presence of at least one of an environmental altering event and a user induced event may cause the controller 30 to instruct one or more sensors 22 to increase a sampling rate. For example, if temperature in the compartment 18 is varying rapidly (e.g., pulldown mode) then the sampling rate for sensors 22 may be increased. Alternatively, the absence of at least one of an environmental altering event and a user induced event may cause the controller 30 to instruct one or more sensors 22 to decrease a sampling rate. For example, if temperature in the compartment 18 is stable, then the sampling rate for sensors 22 may be decreased. Alternatively, the sensor 22 may be an electronic controller including a microprocessor and an associated memory bank, which would allow the sensor 22 to increase or decrease the sampling rate, on its own without the help of the controller 30.

## Claims

1. An apparatus for cold chain monitoring of perishable goods, comprising:
at least one environmental sensor (22) to monitor at least one environmental parameter;
at least one event detector (24) to detect at least one of an environmental altering event and a user induced event; and
a controller (30) to receive and log a plurality of readings from the at least one environmental sensor (22) at a selected sampling rate;
**characterised in that** the apparatus is adapted to adjust the sampling rate depending on at least one of the environmental altering event and the user induced event.

2. The apparatus of any of the preceding claims, wherein the at least one environmental sensor (22) further comprises:
a power source (26) providing electrical power to the at least one environmental sensor (22).

3. The apparatus of any of the preceding claims, wherein:
at least one of the controller (30) and the at least one environmental sensor (22) commands the sampling rate to adjust.

4. The apparatus of any of the preceding claims, further comprising:
a communication module (32) in operative communication with the controller (30) and wireless operative communication with a remote controller (70), wherein the communication module is configured to transmit at least one data signal associated with the plurality of readings to the remote controller.

5. The apparatus of claim 4, wherein:
the communication module (32) is configured to receive at least one remote command from the remote controller (70) and transmit the at least one remote command to the controller,
and/or wherein the communication module (32) is a cellular interface to communicate with a cellular network

6. The apparatus of claim 4 or 5, wherein:
the remote controller (70) commands the sampling rate to adjust.

7. The apparatus of any of the preceding claims, wherein:
the apparatus is associated with a transportation operation.

8. The apparatus of any of the preceding claims, wherein:
the perishable goods include at least one of food and pharmaceuticals.

9. A method for cold chain monitoring of perishable goods, comprising:
monitoring, using at least one environmental sensor (22), at least one environmental parameter;
receiving and logging, using a controller (30), a plurality of readings from the at least one environmental sensor (22) at a selected sampling rate; and
monitoring, using at least one event detector (24), at least one of an environmental altering event and a user induced event; **characterised in that** the method comprises
adjusting the sampling rate depending on at least one of the environmental altering event and the user induced event.

10. The method of claim 9, further comprising
electrically powering, using a dedicated power source (26), the at least one environmental sensor (22).

11. The method of claim 9 or 10, further comprising
commanding the adjustment of the sampling rate via at least one of the controller (30) and the at least one environmental sensor (22).

12. The method of claim 9, 10 or 11, further comprising:
wirelessly transmitting, using a communication module (32) in operative communication with the controller (30), at least one data signal associated with the plurality of readings to a remote controller (70).

13. The method of claim 12, further comprising:
receiving, using the communication module (32), at least one remote command from the remote controller (70); and
transmitting the at least one remote command to the controller (30),
and/or wherein the communication module (32) is a cellular interface to communicate with a cellular network

14. The method of claim 12 or 13, further comprising:
commanding the adjustment of the sampling rate via the remote controller (70).

15. The method of any of claims 9 to 14, further comprising:
transporting the perishable goods, and/or wherein
the perishable goods include at least one of food and pharmaceuticals.

## Patentansprüche

1. Einrichtung zur Kühlkettenüberwachung von verderblichen Waren, umfassend:
mindestens einen Umgebungssensor (22) zur Überwachung mindestens eines Umgebungsparameters;
mindestens einen Ereignisdetektor (24), um mindestens eines von einem umgebungsverändernden Ereignis und einem benutzerinduzierten Ereignis zu detektieren; und
eine Steuerung (30) zum Empfangen und Protokollieren einer Vielzahl von Messwerten von dem mindestens einen Umgebungssensor (22) mit einer ausgewählten Abtastrate;
**dadurch gekennzeichnet, dass** die Einrichtung so ausgelegt ist, dass es die Abtastrate in Abhängigkeit von mindestens einem der beiden Ereignisse, nämlich dem umgebungsverändernden Ereignis und dem benutzerinduzierten Ereignis, anpasst.

2. Einrichtung nach einem der vorstehenden Ansprüche, wobei der mindestens eine Umgebungssensor (22) weiter umfasst:
eine Energiequelle (26), die elektrischer Energie an mindestens einen Umgebungssensor (22) bereitstellt.

3. Einrichtung nach einem der vorstehenden Ansprüche, wobei:
mindestens eine der Steuerungen (30) und der mindestens eine Umgebungssensor (22) die Anpassung der Abtastrate befiehlt.

4. Vorrichtung nach einem der vorangehenden Ansprüche, weiter umfassend:
ein Kommunikationsmodul (32), das in operativer Kommunikation mit der Steuerung (30) und in drahtloser operativer Kommunikation mit einer Fernsteuerung (70) steht, wobei das Kommunikationsmodul so konfiguriert ist, dass es mindestens ein Datensignal, das der Vielzahl von Messwerten zugeordnet ist, an die Fernsteuerung überträgt.

5. Einrichtung nach Anspruch 4, wobei:
das Kommunikationsmodul (32) so konfiguriert ist, dass es mindestens einen Fernbefehl von der Fernsteuerung (70) empfängt und den mindestens einen Fernbefehl an die Steuerung sendet,
und/oder wobei das Kommunikationsmodul (32) eine zellulare Schnittstelle zur Kommunikation mit einem zellularen Netzwerk ist.

6. Einrichtung nach Anspruch 4 oder 5, wobei:
die Fernsteuerung (70) die Einstellung der Abtastrate befiehlt.

7. Einrichtung nach einem der vorstehenden Ansprüche, wobei:
die Einrichtung einem Transportvorgang zugeordnet ist.

8. Einrichtung nach einem der vorstehenden Ansprüche, wobei:
zu den verderblichen Waren mindestens eines von Lebensmitteln und Arzneimitteln gehört.

9. Verfahren zur Überwachung der Kühlkette von verderblichen Waren, umfassend:
Überwachung mindestens eines Umgebungsparameters mit Hilfe mindestens eines Umgebungssensors (22);
Empfangen und Aufzeichnen einer Vielzahl von Messwerten von dem mindestens einen Umgebungssensor (22) mit einer ausgewählten Abtastrate unter Verwendung einer Steuerung (30); und
Überwachen, unter Verwendung mindestens eines Ereignisdetektors (24), mindestens eines von einem umgebungsverändernden Ereignis und einem benutzerinduzierten Ereignis; **dadurch gekennzeichnet, dass** das Verfahren
das Einstellen der Abtastrate in Abhängigkeit von mindestens einem von dem umgebungsverändernden Ereignis und dem benutzerinduzierten Ereignis umfasst.

10. Verfahren nach Anspruch 9, weiter umfassend
elektrische Speisung des mindestens einen Umgebungssensors (22) unter Verwendung einer eigenen Stromquelle (26).

11. Verfahren nach Anspruch 9 oder 10, weiter umfassend
Befehlen der Anpassung der Abtastrate über mindestens eine der Steuerung (30) und den mindestens einen Umgebungssensor (22).

12. Verfahren nach Anspruch 9, 10 oder 11, weiter umfassend:
drahtloses Übertragen, unter Verwendung eines Kommunikationsmoduls (32), das in operativer Kommunikation mit der Steuerung (30) steht, mindestens eines Datensignals, das der Vielzahl von Messwerten zugeordnet ist, an eine Fernsteuerung (70).

13. Verfahren nach Anspruch 12, weiter umfassend:
Empfangen, unter Verwendung des Kommunikationsmoduls (32), mindestens eines Fernbefehls von der Fernsteuerung (70); und
Übermittlung des mindestens einen Fernbefehls an die Steuerung (30),
und/oder wobei das Kommunikationsmodul (32) eine zellulare Schnittstelle zur Kommunikation mit einem zellularen Netzwerk ist.

14. Verfahren nach Anspruch 12 oder 13, weiter umfassend:
Befehlen der Einstellung der Abtastrate über die Fernsteuerung (70).

15. Verfahren nach einem der Ansprüche 9 bis 14, weiter umfassend:
Transport der verderblichen Waren, und/oder wobei
zu den verderblichen Waren mindestens eines von Lebensmitteln und Arzneimitteln gehört.

## Revendications

1. Appareil pour la surveillance de la chaîne du froid de biens périssables, comprenant:
au moins un capteur environnemental (22) pour surveiller au moins un paramètre environnemental ;
au moins un détecteur d'événement (24) pour détecter au moins un d'un événement altérant l'environnement et un événement provoqué par l'utilisateur ; et
un dispositif de commande (30) pour recevoir et journaliser une pluralité de relevés à partir du au moins un capteur environnemental (22) à un taux d'échantillonnage sélectionné ;
**caractérisé en ce que** l'appareil est adapté pour ajuster le taux d'échantillonnage en fonction d'au moins un de l'événement altérant l'environnement et l'événement provoqué par l'utilisateur.

2. Appareil selon l'une quelconque des revendications précédentes, dans lequel le au moins un capteur environnemental (22) comprend en outre :
une source de courant (26) fournissant un courant électrique au au moins un capteur environnemental (22).

3. Appareil selon l'une quelconque des revendications précédentes, dans lequel :
au moins un du dispositif de commande (30) et du au moins un capteur environnemental (22) commande le taux d'échantillonnage à ajuster.

4. Appareil selon l'une quelconque des revendications précédentes, comprenant en outre :
un module de communication (32) en communication fonctionnelle avec le dispositif de commande (30) et en communication fonctionnelle sans fil avec un dispositif de commande distant (70), dans lequel le module de communication est configuré pour transmettre au moins un signal de données associé à la pluralité de relevés au dispositif de commande distant.

5. Appareil selon la revendication 4, dans lequel :
le module de communication (32) est configuré pour recevoir au moins une commande à distance à partir du dispositif de commande distant (70) et transmettre la au moins une commande à distance au dispositif de commande,
et/ou dans lequel le module de communication (32) est une interface cellulaire pour communiquer avec un réseau cellulaire.

6. Appareil selon la revendication 4 ou 5, dans lequel :
le dispositif de commande distant (70) commande le taux d'échantillonnage à ajuster.

7. Appareil selon l'une quelconque des revendications précédentes, dans lequel :
l'appareil est associé à une opération de transport.

8. Appareil selon l'une quelconque des revendications précédentes, dans lequel :
les biens périssables incluent au moins un d'aliments et de produits pharmaceutiques.

9. Procédé pour la surveillance de la chaîne du froid de biens périssables, comprenant :
une surveillance, en utilisant au moins un capteur environnemental (22), d'au moins un paramètre environnemental ;
une réception et une journalisation, en utilisant un dispositif de commande (30), d'une pluralité de relevés à partir du au moins un capteur environnemental (22) à un taux d'échantillonnage sélectionné ; et
une surveillance, en utilisant au moins un détecteur d'événement (24), d'au moins un d'un événement altérant l'environnement et un événement provoqué par l'utilisateur ; **caractérisé en ce que** le procédé comprend
un ajustement du taux d'échantillonnage en fonction d'au moins un de l'événement altérant l'environnement et l'événement provoqué par l'utilisateur.

10. Procédé selon la revendication 9, comprenant en outre
une alimentation électrique, en utilisant une source de courant dédiée (26), du au moins un capteur environnemental (22).

11. Procédé selon la revendication 9 ou 10, comprenant en outre
une commande de l'ajustement du taux d'échantillonnage via au moins un du dispositif de commande (30) et du au moins un capteur environnemental (22).

12. Procédé selon la revendication 9, 10 ou 11, comprenant en outre :
une transmission sans fil, en utilisant un module de communication (32) en communication fonctionnelle avec le dispositif de commande (30), d'au moins un signal de données associé à la pluralité de relevés à un dispositif de commande distant (70).

13. Procédé selon la revendication 12, comprenant en outre :
une réception, en utilisant le module de communication (32), d'au moins une commande à distance à partir du dispositif de commande distant (70) ; et
une transmission de la au moins une commande à distance au dispositif de commande (30),
et/ou dans lequel le module de communication (32) est une interface cellulaire pour communiquer avec un réseau cellulaire.

14. Procédé selon la revendication 12 ou 13, comprenant en outre :
une commande de l'ajustement du taux d'échantillonnage via le dispositif de commande distant (70).

15. Procédé selon l'une quelconque des revendications 9 à 14, comprenant en outre :
un transport des biens périssables, et/ou dans lequel
les biens périssables incluent au moins un d'aliments et de produits pharmaceutiques.
